# EUROPEAN PATENT SPECIFICATION

(11) **EP 3 742 456 B1**
(45) Date of publication and mention of the grant of the patent: **04.05.2022**
(21) Application number: 19000257.6
(22) Date of filing: 24.05.2019
(51) Int. Cl.: G21C 23/00, B01D 53/18, B01D 71/52, G21G 1/00, G21G 1/02, B01D 53/02, B01D 59/12, B01D 59/26, B01D 59/50, B01D 53/00, B01D 53/22

(54) **APPARATUS AND METHOD FOR HELIUM-3 SEPARATION AND ENRICHMENT**
VORRICHTUNG UND VERFAHREN ZUR HELIUM-3-TRENNUNG UND -ANREICHERUNG
APPAREIL ET PROCÉDÉ DE SÉPARATION ET ENRICHISSEMENT D'HÉLIUM-3

(43) Date of publication of application: 25.11.2020
(73) Proprietor: INCDTCI - ICSI Institutul National de Cercetare- Dezvoltare pentru Tehnologii Criogenice si Izotopice, 240050 Valcea (RO)
(72) Inventor: Mihaela Draghia, Mirela, Timisoara, 300360 (RO); Ovidiu Stefan, Liviu, Râmnicu Valcea 240284 (RO); Mihaela Bornea, Anisia, Râmnicu Valcea 240492 (RO); Bulubasa, Gheorghe, Râmnicu Valcea 240425 (RO); Valentin Zamfirache, Marius, Râmnicu Valcea 240156 (RO)
(74) Representative: Mehl-Mikus, Claudia

(56) References cited:
- US-A- 3 350 844
- US-A1- 2013 301 768
- ZHOU JUNBO ET AL: "Quantitative analysis of oxygen, nitrogen, hydrogen and hydrogen deuteride in high-purity deuterium by gas chromatography", INTERNATIONAL JOURNAL OF HYDROGEN ENERGY, ELSEVIER SCIENCE PUBLISHERS B.V., BARKING, GB, vol. 37, no. 1, 14 February 2011 (2011-02-14), pages 1089-1093, XP028348581, ISSN: 0360-3199, DOI: 10.1016/J.IJHYDENE.2011.02.082 [retrieved on 2011-03-04]

## Description

The invention refers to an apparatus and a method for separation and enrichment of helium-3 from a nuclear power plant cover gas.

Due to the low natural abundance in nature, helium-3 recovery from natural deposits is not economical. So far, the main source of producing helium-3 is from the nuclear weapons program where helium-3 is considered a waste product of tritium decay.

There are additional possibilities of producing helium-3, namely to recover it from the CANDU (Canada Deuterium Uranium) nuclear power plants. CANDU nuclear power plants are the biggest tritium source from nonmilitary nuclear industry. Consequently, CANDU nuclear power plants are the biggest source of Helium-3 as this is produced from tritium decay.

In the CANDU power plants, tritium is continuously produced in the moderator and the cooling system due to neutron capture by the deuterium atoms of the heavy water. Consequently, due to tritium decay, helium-3 is also continuously generated. In a CANDU station, the moderator which tritium and consequently helium-3 is produced in, is enveloped by the cover gas system. The cover gas system comprises helium-4 which during operation is contaminated with deuterium, tritium, some traces of nitrogen and oxygen and also contains helium-3 as a result of tritium decay. When CANDU stations reach the steady state as far as tritium accumulation in the heavy water of the moderator is concerned, the amount of helium-3 released from the heavy water in the cover gas is virtually equal with the amount of tritium generated in the moderator. A CANDU 600 station generates almost 100 g tritium per year. At steady state, the amount of helium-3 produced by tritium decay is almost 15 mols which is equivalent with 330 liters of helium-3 per year. Helium-3 concentration in the cover gas may be in the range of 0.01 mol-% to 0.1 mol-%. For comparison, Helium-3 natural abundance is 0.000137 mol-% in Helium, while helium volume fraction in natural gas may vary from 0.055 mol-% to 0.5 mol-%.

The cover gas system facilitates the recombination of created due to radiolysis of the moderator D₂O. The explosion hazard is eliminated by keeping D₂ and O₂ levels within operating range, namely well below 1 % D₂, with O₂ concentrations slightly higher to ensure a sufficient quantity of O₂ for recombination. All reactor operating states require the circulation of the cover gas, in view of monitoring and deuterium recombination with oxygen. An auxiliary system may be implemented in the circulation loop of the cover gas in order to remove and recover Helium-3.

Helium-3 from the cover gas interacts with neutrons and generates tritium, which is a concern for the processing of cover gas and especially releasing it in the environment.

In a reference paper "Direct harvesting of Helium-3 (3He) from heavy water nuclear reactors" by G. Bentoumi*, R. Didsbury, G. Jonkmans, L. Rodrigo and B. Sur from Atomic Energy of Canada Limited, Chalk River Laboratories, Chalk River, Ontario, Canada, K0J 1J0, DOI: http:dx.doi.org/10.12943/ANR.2013.00010 it was identified that several processing options are available for consideration for the processing of the CANDU moderator cover gas to extract high purity helium-3 (³He). These include:
- Pre-enrichment with "heat-flush" method and final enrichment with distillation,
- Pre-enrichment with "super-leak" method and final enrichment with distillation,
- Pre-enrichment with "super-leak" method and final enrichment with thermal diffusion.

In CA 2 810 716 A1 a method of collecting helium-3 from a nuclear reactor is disclosed. The method includes the steps of a) providing heavy water at least part of which is exposed to a neutron flux of the reactor, b) providing cover gas which is helium-4 in fluid communication with the heavy water, c) operating the nuclear reactor whereby thermal neutron activation of deuterium in the heavy water produces tritium (³H) and at least some of the tritium produces helium-3 gas by β-decay and at least a portion of the helium-3 gas escapes from the heavy water and mixes with the cover gas, d) extracting an outlet gas stream, the outlet gas stream comprising a mixture of the cover gas being helium-4 and the helium-3 gas, and e) separating the helium-3 gas from the outlet gas stream. For separating helium-3 from the mixture of helium-3 and helium-4 it is suggested therein to use at least one of the known methods including thermal diffusion method, fractional distillation method, "heat-flush" method, "super-leak" method and cryogenic/differential absorption method.

Based on the state of the art, there is a need to develop additional processes for helium-3 recovery in order to diversify its production outside from the military technology. There is a need to decrease the energetic consumption of helium-3 recovery from mixtures, by considering mixtures wherein helium-3 is present in a relatively high concentration. There is a need to decrease the amount of helium-3 in the cover gas in order to reduce the tritium generation that may have an impact on releasing it in the environment.

Therefore it is an object of the herein disclosed invention to provide an improved apparatus allowing to increase the yield of helium-3 obtainable from a nuclear power plant cover gas.

This object is solved by an apparatus with the features of independent claim 1.

A further object is it to optimize the proceedings for separating helium-3 from a nuclear power plant cover gas. Such optimized proceedings are disclosed by the method showing the steps of independent claim 11.

Preferred embodiments of apparatus and method are set out in the respective dependent claims.

According to a first embodiment of the invention an apparatus is provided for separation and enrichment of helium-3 from a nuclear power plant cover gas comprising a mixture of helium-3 and helium-4, said apparatus referring to an apparatus that comprises a cover gas duct and at least two separator stages arranged successively, wherein the cover gas duct is connected to a first separator stage of the at least two separator stages. As is herein suggested, the first separator stage is a gas chromatographic unit comprising at least one gas chromatographic column (or several columns in parallel and/or in series), wherein the apparatus comprises a carrier gas duct converging with the cover gas duct into a feed duct upstream the gas chromatographic column - if there is only one gas chromatographic column - or upstream of the first of the number of gas chromatic columns, if there is a plurality of gas chromatic columns. Then, the second separator stage is connected via an effluent duct to the upstream first separator stage and comprises at least one of a permeation membrane reactor and a distillation device.

The first separator stage using gas chromatography enables enrichment of helium-3 in a section of the effluent stream which is at least partially separated from a stream section comprising helium-4 due to different sorption properties of helium-3 and helium-4 in gas chromatography without the need of energy consuming cryogenic temperatures in the first place.

In a preferred embodiment of the apparatus according to an embodiment of the invention, the second separator stage comprises both, a permeation membrane reactor and a distillation device arranged downstream of the permeation membrane reactor. The permeation membrane reactor comprises a separation membrane being permeable to the carrier gas and a permeate duct for a helium-3 depleted, carrier gas-enriched stream and a retentate outlet duct for a helium-3 rich stream, wherein the retentate outlet duct is connected to the distillation device. The distillation device preferably may be a cryogenic distillation device. So, advantageously cryogenic temperatures are limited to the last step, which is carried out with the already helium-3 enriched stream. Since energy used for cryogenic effects is necessary tor that final step only, the proceedings result in an optimized energy consumption.

Generally, the gas chromatographic unit may be configured to perform displacement gas chromatography.

In another embodiment the gas chromatographic unit comprises at least one first gas chromatographic column and at least one second gas chromatographic column. So, the gas chromatographic unit may comprise a number of several first gas chromatographic columns (in parallel and/or in series), and/or a system of several second gas chromatographic columns (in parallel and/or in series). The at least one first gas chromatographic column is arranged in parallel to the at least one second gas chromatographic column. So, the at least one first gas chromatographic column and the at least one second gas chromatographic column can be operated alternatively, wherein the first and the second gas chromatographic columns are configured to be operated using different temperature levels. The choice of the column of the first and second columns to be used may depend on the composition of the feed gas, mainly on the ratio of helium-3 to helium-4 in the feed gas.

A further embodiment of the apparatus according to the invention suggests that the at least one first gas chromatographic column and the at least one second gas chromatographic column are provided with internal packings, wherein the packing of the at least one first gas chromatographic column, which is operated at an elevated temperature level, is preferably iron doped alumina, and the packing of the at least one second gas chromatographic column, which is operated at a lower temperature level, is preferably a molecular sieve, more preferred a molecular sieve type 5A. The temperature level of the at least one first gas chromatographic column may range from 323 K to 573 K, preferably from 373 K to 483 K, more preferred from 423 K and 473 K. The temperature level of the at least one second gas chromatographic column may range from 77 K to 220 K, preferably from 77 K to 100 K, more preferred at 77 K.

According to another embodiment of the apparatus according to the invention, the apparatus may comprise a refeed duct extending from the second outlet duct upstream of the distillation device to the carrier gas duct or to the cover gas duct or to the feed duct. So, further enrichment of helium-3 by double or multiple passage of the gas chromatographic unit is possible prior to leading the Helium-3 enriched stream to the last separation step, which is then cryogenic distillation.

In a further embodiment of the apparatus according to the invention, the apparatus may comprise
- at least one control unit for controlling valves which are arranged in the cover gas duct, the feed duct, and/or the effluent duct, and
- at least one helium-3 measuring device assigned to the effluent duct and connected to the at least one control unit. Then, the at least one control unit may be configured to
   a) periodically open and close the cover gas duct by actuating of a cover gas duct valve for a batch mode injection of the cover gas stream into the gas chromatography unit, and/or
   b) alternatively route the effluent stream from the effluent duct into a separator stage inlet duct or into a discharge or recycling duct by actuating of a effluent duct valve arranged downstream of the at least one helium-3 measuring device depending on the presence of helium-3 in the effluent stream detected by the at least one helium-3 measuring device. Thus, only helium-3 containing effluent stream sections are led to the second separator stage.

In a further developed embodiment the apparatus according to the invention said apparatus may further comprise at least one bypass line in parallel to the effluent duct for bypassing at least one of the at least one helium-3 measuring device, wherein the at least one bypass line diverges from the effluent duct upstream of the respective helium-3 measuring device and rejoins the effluent duct or the separator stage inlet duct downstream of the respective helium-3 measuring device. In that, the at least one bypass line is separated from the effluent duct by a respective bypass valve being connected to the control unit which is configured to alternatively route the effluent stream from the effluent duct into the respective helium-3 measuring device or into the at least one bypass line. For measurements, only one measuring device shall be used at any time. Therefore, the other one may be bypassed.

Alternatively or additionally the apparatus may further comprise a retentate outlet duct valve arranged in the retentate outlet duct and a further helium-3 measuring device assigned to the retentate outlet duct and connected to the at least one control unit which is configured to alternatively route the helium-3 rich stream into the refeed duct or into the distillation device by actuating of the retentate outlet duct valve depending on a concentration of helium-3 in the helium-3 rich stream measured by the measuring device.

Furthermore, the apparatus according to another embodiment may optionally comprise a preliminary purification stage for removing of impurities from the cover gas connected to the cover gas duct upstream of the first separator stage.

Further embodiments of the apparatus according to the invention suggest that a separation performance of the permeation membrane reactor is configured in a manner that the helium-3 rich carrier gas depleted stream in retentate outlet duct has a concentration of carrier gas of less than 1 mol-%, and/or that the carrier gas is hydrogen and the separation membrane is a hydrogen permeable membrane, which preferably may be a zeolite membrane or a palladium-silver-based membrane.

In a first embodiment of the method according to the invention for separation and enrichment of helium-3 from a nuclear power plant cover gas comprising a mixture of helium-3 and helium-4, said method, which is suggested to be preferably performed using an apparatus according to an embodiment of the invention comprises leading of a cover gas stream into a first separator stage followed by a second separator stage. The method comprises the steps:
- in the first separator stage injecting a feed gas stream comprising the cover gas stream and a carrier gas stream into a gas chromatographic unit comprising at least one gas chromatographic column, thereby separating at least partially helium-3 into a stream section and helium-4 into another stream section in the carrier gas stream;
- extracting a helium-3 containing effluent stream section from the effluent stream;
- feeding the helium-3 containing effluent stream section into the downstream second separator stage for performing at least one of a permeation membrane separation and a distillation, thereby obtaining a helium-3 rich stream.

An embodiment of the method according to the invention suggests that in the second separator stage the helium-3 containing effluent stream section is subjected the permeation membrane separation followed by distillation, preferably cryogenic distillation for obtaining the helium-3 rich stream.

In a further embodiment of the method according to the invention in the first separator stage the feed gas stream is injected alternatively into at least one first gas chromatographic column being operated at a temperature ranging from 323 K to 573 K or into at least one second gas chromatographic column being operated at a temperature ranging from 77 K to 200 K depending on the composition of the cover or feed gas, mainly on the ratio of helium-3 to helium-4 in the cover/feed gas.

According to a another inventive embodiment of the method, the step of extracting the helium-3 containing effluent stream section from the effluent stream comprises - controlling the effluent stream by at least one helium-3 measuring device and
a) in the case of detecting the presence of helium-3 in the effluent stream by the at least one helium-3 measuring device, routing the helium-3 containing effluent stream section into the separator stage and
b) in the case of not detecting any helium-3 in the effluent stream by the at least one helium-3 measuring device, routing the helium-3-less effluent stream section into a discharge or recycling duct.

In further embodiments of the method according to the invention at least a part of the helium-3 rich stream obtained by the permeation membrane separation is recycled to the feed gas stream, and/or the concentration of carrier gas in the helium-3 rich stream obtained from the separation system is less than 1 mol-%.

Further embodiments and several advantages connected with these further embodiments become apparent and better comprehensible by the following detailed description referenced by the accompanying single figure.

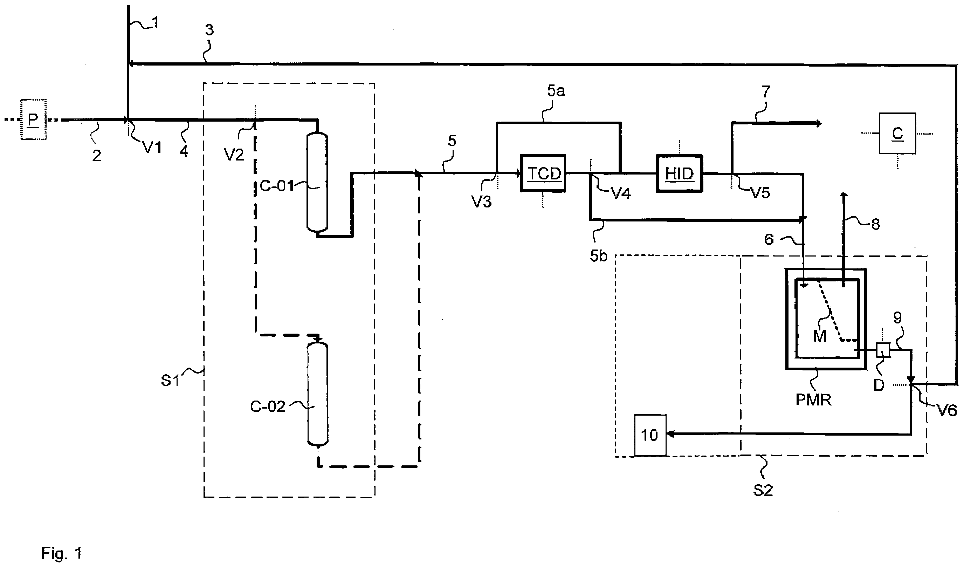

Figure 1 shows a schematic flow chart of an embodiment of an apparatus according to the invention.

The method and apparatus which is presented below and explained by means of fig. 1 illustrate one embodiment of the apparatus and method of the invention and are not intended to limit the scope of the invention in any way.

The essential features of the apparatus according to an embodiment of the invention and method for separation and enrichment of helium-3 from a nuclear power plant cover gas comprising a mixture of helium-3 and helium-4 are based on the use of at least one gas chromatographic column in a first separator stage and at least one downstream separation device as a permeation membrane reactor and/or a distillation device, especially a cryogenic distillation device, see details below. The other features present such as downstream systems, operating parameters such as pressure, temperature, compositions, flow rates, etc. are optional and can be combined in any configuration, as necessary and known to the person skilled in the art.

In fig. 1, the apparatus shown has a first gas chromatographic column C-01 and a second gas chromatographic column C-02 in the first separator stage 1. The second gas chromatographic column C-02 is an optional device, as indicated by the dashed lines, which illustrate branches of the feed duct 4 and the effluent duct 5.

A stream of the cover gas from a CANDU unit (or several CANDU units) is withdrawn from the CANDU unit(s) and fed to the apparatus by cover gas duct 2. This cover gas comprises as a major component helium-4 and helium-3. Impurities may also be present.

In a preliminary stage, this cover gas stream may optionally be subjected to a purification process P (optionality indicated by dotted lines) aimed at removing various impurities such as moisture, nitrogen, traces of oxygen, etc. This preliminary process can be realized by known techniques such as water adsorption on molecular sieve beds followed or not by cryogenic adsorption at low temperatures (for example from 70 K to 90 K, specifically from 76 to 78 K) in view of trapping small amount (sometimes only traces) of oxygen, nitrogen and other gases which have the condensation temperature above 77 K at pressures from 1 bar to medium pressure range, i.e. up to 100 bar. A combination of several processes may also be envisaged. Nevertheless the preliminary purification may not be necessary as for example the presence of hydrogen isotopes and oxygen does not have a significant influence on the gas chromatographic unit. The cover gas feed stream (purified or not) is routed to the separator stage S1 being a gas chromatographic unit.

In one preferred embodiment of the invention, the gas chromatography performed with column C-01 (or C-02) is essentially based on displacement gas chromatography. Displacement gas chromatography is a process wherein the feed gas stream is injected in a column and then displaced by a solute that is predominantly absorbed, before the components of the original mixture.

In the apparatus of fig. 1 and the process corresponding carried out with said apparatus, the feed gas stream, which is injected into respective selected gas chromatography column C-01 (or C-02) through feed duct 4, comprises the combination of a carrier gas, supplied through carrier gas duct 1 and the cover gas stream (i. e. the mixture of helium-3 and helium-4). The cover gas feed stream fed by the cover gas duct 2 is injected in a batch mode by valve V1, which may be controlled by control unit C, while the carrier gas from carrier gas duct 1 flows in a continuous manner. The carrier gas may be any gas, but in a preferred embodiment the carrier gas is hydrogen.

As fig. 1 shows, the gas chromatographic unit of separator stage 1 herein comprises two columns C-01, C-02 in parallel operating at two different temperature levels. Only one column C-01 or C-02 operates at a given time. The choice of one or the other column C-01, C-02 is made depending on the composition of the cover gas, or the fed gas, respectively, mainly on the ratio of helium-3 to helium-4 in the cover/fed gas. The choice of the exact temperature level for each column may be correlated with the composition of the cover/fed gas. In a preferred embodiment, the temperature level of column C-01 ranges from 323 K to 573 K. more preferred from 373 K to 483 K, most preferred from 423 K to 473 K. In a preferred embodiment, the temperature level of column C-02 ranges from 77 K to 220 K, more preferred from 77 K to 100 K, most preferred it is 77 K.

The columns are provided with internal equipment suitable for sorption, as known from gas chromatographic units. Preferably, the columns are equipped with packing. For column C-01, operating at elevated temperatures, the preferred packing is iron doped alumina (or, e.g., packings available under the trademarks Poropak Q or HayeSep R). For column C- 02, operated at low temperatures, the preferred packing is molecular sieve type 5A (or, e.g., HayeSep R).

It is understood that a first separator stage according to the invention may actually comprise more than one gas chromatographic column operating at elevated temperatures or two parallel gas chromatographic columns operating at different temperature levels. The first separator stage may actually comprise several first gas chromatographic columns operating at elevated temperatures and arranged in parallel and/or in series fulfilling the above described function. In a similar manner, the first separator stage may actually comprise several second gas chromatographic columns operating at low temperature and arranged in parallel and/or in series fulfilling the above described function. Accordingly, the first separator stage may comprise both, a system of several first gas chromatographic columns and a parallel system of several second gas chromatographic columns.

In gas chromatographic column C-01 or C-02 a helium-3 comprising carrier gas stream section is separated (at least partially) from a He-4 comprising carrier gas stream section in the effluent stream.

The effluent stream from columns C-01/C-02 is conducted through effluent duct 5 to the the second separator stage S2 via a corresponding inlet duct 6.The helium-3 presence or amount, respectively, in the effluent stream may be monitored by a measuring system. For this purpose, the apparatus of **fig.1** shows a measuring system assigned to the effluent duct 5. In the following the functioning and details of this optional system are explained.

A measuring system, if implemented, may comprise one, two or more sensors, which may be based on different measuring principles. For exemplification, the system may comprise at least one one Helium Ionization Detector and/or at least one thermal conductivity detector which is based on the difference in the thermal conductivity between the carrier gas and the cover gas stream to be measured. The measuring system may use the information from one type of the sensors or a combination between the measurements from different types of sensors. The information provided by the measuring system may be used for control and operation of valves V and the downstream processes by control unit C. In order to maintain a clear arrangement in fig. 1, the connections between measuring devices TCD, HID, D and the control unit C, as well as connections between operable valves V1-V6 and the control unit C are not shown but implied by shot dotted lines.

The measuring system assigned to effluent duct 5 as shown in fig. 1 comprises two sensors, a thermal conductivity detector TCD and a Helium Ionization Detector HID.

When the measuring system detects helium-3 peak of the helium-3 comprising stream section in the effluent gas 5 that passes the measuring system, the effluent gas is routed to the downstream separator stage S2. When such a helium-3 peak occurs, the effluent gas contains helium-3 and carrier gas. When the measuring system does not detect helium-3, the effluent stream, containing carrier gas with or without helium 4, may be discharged through duct 7 or recycled as carrier gas, by actuating valve 5 by control unit C.

Depending on the type of the carrier gas it may also comprise helium-4. When hydrogen is used as carrier gas, it is generally known that the two peaks of helium-3 and helium-4 are not completely separated; the effluent gas will therefore comprise hydrogen, helium-3 and helium-4. When helium-4 is used as carrier gas, the effluent gas will comprise helium-3 and helium-4.

Though separation is not competed in the first separator stage S1. effectiveness of stage S2 is clearly enhanced since only Helium-3 comprising stream sections are led to the second separator stage S2.

Furthermore, Fig. 1 shows two bypass lines 5a, 5b, each of which is arranged for bypassing one of the detectors TCD, HID. TCD or HID bypassing may be carried out, since it is expected that the accuracy of TCD and HID depends on the composition of the gas. During the commissioning phase of the apparatus the accuracy dependence composition of each detector can be determined and will be implemented for the nominal operation.

As suggested by the dotted lines, the second separator stage S2 may comprise only a permeation membrane reactor PMR or a combination of a permeation membrane reactor PMR and a distillation device 10. Not shown is an embodiment, where the second separator stage may only just comprise a distillation device.

The permeation membrane reactor PMR is meant to separate helium-3 from the carrier gas in the effluent stream section of the first gas chromatographic stage S1 such as to produce a helium-3 rich stream, which is drawn through retentate outlet duct 9 and a helium-3 depleted, carrier gas-enriched stream, which is discharged or recycled through permeate outlet duct 8.

The composition of the helium-3 rich stream in retentate outlet duct 9 may be measured by a further measuring device D such as to determine the helium-3 to helium-4 ratios. The analytics which may be employed for measuring the ratio of helium-3 to helium-4 in this stream are standard gas measuring equipment such as mass spectrometry, gas chromatography, etc.

The separation performances of the permeation membrane system are preferably such that the helium-3 rich, carrier gas depleted stream in retentate outlet duct 9 has a concentration of carrier gas of less than 1 mol-%.

When the carrier gas is hydrogen, the permeation membrane reactor PMR comprises a H₂-permeable membrane M. Any type of H₂-permeable membrane is suitable to be employed, zeolite membranes or palladium-silver-based membranes may be preferred.

In a preferred embodiment the permeation membrane reactor PMR may be operated at a pressure drop between the feed stream at the inlet side 6 to the permeation reactor PMR and the permeated side (permeate outlet duct 8) of from 0.1 bar up to 3.0 bar, more preferred 0.1 bar to 3.0 bar, 0.5 bar to 3.0 bar, 1.0 bar to 3.0 bar, 2,0 bar to 3.0 bar.

Depending on the concentration of helium-3 in the helium-3 rich stream in retentate outlet duct 9, at above a threshold value evaluated by the control unit C on basis of values measured be detector D, this stream may be routed to a cryogenic distillation device 10, or when below the threshold value, recycled through refeed duct 3 by actuating of valve V6 by the control unit C. The refeed duct 3 joins the carrier gas duct 1 upstream of the inlet of first separator stage S1, such as to be beforehand mixed with the carrier gas. Other than in Fig. 1, a refeed duct may merge with the cover gas duct 2 or the feed duct 4 likewise. The recycling of the helium-3 rich stream assures that by re-processing in the gas chromatographic unit, a further enrichment will take place. A threshold value for the concentration of helium-3 in the helium-3 rich stream may be for example, 10 times higher than the helium-3 concentration value in the cover gas feed stream or 50 times higher than the helium-3 concentration value in the cover gas feed stream or 100 times higher than the helium-3 concentration value in the cover gas feed stream.

The cryogenic distillation device 10 is essentially employed to produce a helium-3 stream, from a helium-3 and helium-4 comprising stream. The cryogenic distillation system may comprise, as usually in the art, a distillation column, a condenser at the top of the column, and a reboiler at the bottom of the column. The helium-3 rich stream from the upstream separation system is used as feed in the cryogenic distillation column. The location of the feed stream depends on the actual concentration value of helium-3 in the helium-3 rich stream. Several locations may be employed as needed and as function of the above mentioned value. The helium-3 stream is collected, at the top of the distillation column and a helium-4 rich stream is collected at the bottom of the column.

The existence of the gas chromatographic unit in combination with a first separation step, preferably based on permeation, has as a benefit reduction in the necessary cooling power for the distillation system.

### REFERENCE SIGNS

- 1: carrier gas duct (hydrogen)
- 2: cover gas duct (Helium-3 + He-4)
- 3: refeed duct (recycled stream enriched with Helium-3 )
- 4: feed duct (cover gas + carrier gas)
- 5: effluent gas duct
- 5a, 5b: bypass lines
- 6: separator stage inlet duct
- 7: discharge/recycle duct
- 8: permeat outlet duct (helium-3 depleted, carrier gas-enriched stream)
- 9: retentat outlet duct (helium-3 rich stream)
- 10: cryogenic distillation device
- C: control unit
- C-01, C-02: gas chromatography unit
- D: Helium-3 detector
- HID: helium ionization detector
- M: membrane
- P: preliminary purification
- PMR: permeation membrane reactor
- S1, S2: first, second separator stage
- TCD: thermal conductivity detector
- V1, V2, V3, V4, V5, V6: valves

## Claims

1. Apparatus for separation and enrichment of helium-3 from a nuclear power plant cover gas comprising a mixture of helium-3 and helium-4, wherein the apparatus comprises a cover gas duct (2) and at least two separator stages (S1, S2) arranged successively, wherein the cover gas duct (2) is connected to a first separator stage (S1) of the at least two separator stages (S1, S2),
**characterized in that**
- the first separator stage (S1) is a gas chromatographic unit comprising at least one gas chromatographic column (C-01, C-02), wherein the apparatus comprises a carrier gas duct (1) converging with the cover gas duct (2) into a feed duct (4) upstream of a first one of the at least one gas chromatographic column (C-01, C-02), and
- the second separator stage (S2) is connected via an effluent duct (5) to the upstream first separator stage (S1) and comprises at least one of a permeation membrane reactor (PMR) and a distillation device (10).

2. Apparatus according to claim 1, wherein the second separator stage (S2) comprises a permeation membrane reactor (PMR) and a distillation device (10) arranged downstream of the permeation membrane reactor (PMR), which comprises a separation membrane (M) being permeable to the carrier gas and a permeate duct (8) for a helium-3 depleted, carrier gas-enriched stream and a retentate outlet duct (9) for a helium-3 rich stream, wherein the retentate outlet duct (9) is connected to the distillation device (10), which preferably is a cryogenic distillation device (10).

3. Apparatus according to claim 1 or 2, wherein the gas chromatographic unit is configured to perform displacement gas chromatography and/or comprises at least one first gas chromatographic column (C-01) and at least one second gas chromatographic column (C-02), wherein the at least one first gas chromatographic column (C-01) is arranged in parallel to the at least one second gas chromatographic column (C-02), wherein the at least one first gas chromatographic column (C-01) and the at least one second gas chromatographic column (C-02) are operable alternatively and are configured to be operated at different temperature levels.

4. Apparatus according to claim 3, wherein
- the at least one first gas chromatographic column (C-01) and the at least one second gas chromatographic column (C-02) are provided with internal packings, wherein the packing of the at least one first gas chromatographic column (C-01) is preferably iron doped alumina and the packing of the at least one second gas chromatographic column (C-02) is preferably a molecular sieve, more preferred a molecular sieve type 5A; and/or
- the temperature level of the at least one first gas chromatographic column (C-01) is in a range from 323 K to 573 K, preferably from 373 K to 483 K, more preferred from 423 K and 473 K, and/or
- the temperature level of the at least one second gas chromatographic column (C-02) is in a range from 77 K to 220 K, preferably from 77 K to 100K, more preferred at 77 K.

5. Apparatus according to any one of claims 2 to 4, wherein the apparatus comprises a refeed duct (3) extending from the second outlet duct (9) upstream of the distillation device (10) to the carrier gas duct (1) or to the cover gas duct (2) or to the feed duct (4).

6. Apparatus according to any one of claims 1 to 5, wherein the apparatus comprises
- at least one control unit (C) for controlling of valves (V1, V2, V3, V4, V5, V6), which are arranged in the cover gas duct (2), the feed duct (4), and/or the effluent duct (5), and
- at least one helium-3 measuring device (TCD, HID) assigned to the effluent duct (5) and connected to the at least one control unit (C),
wherein the at least one control unit (C) is configured to
a) periodically open and close the cover gas duct (2) by actuating of a cover gas duct valve (V1) for a batch mode injection of the cover gas stream into the gas chromatography unit, and/or
b) alternatively route the effluent stream from the effluent duct (5) into a separator stage inlet duct (6) or into a discharge or recycling duct (7) by actuating of a effluent duct valve (V5) arranged downstream of the at least one helium-3 measuring device (TCD, HID) depending on the presence of helium-3 in the effluent stream detected by the at least one helium-3 measuring device (TCD, HID).

7. Apparatus according to claim 6, wherein the apparatus further comprises
- at least one bypass line (5a, 5b) in parallel to the effluent duct (5) for bypassing at least one of the at least one helium-3 measuring device (TCD, HID), wherein the at least one bypass line (5a, 5b) diverges from the effluent duct (5) upstream of the respective helium-3 measuring device (TCD, HID) and rejoins the effluent duct (5) or the separator stage inlet duct (6) downstream of the respective helium-3 measuring device (TCD, HID), and wherein the at least one bypass line (5a, 5b) is separated from the effluent duct (5) by a respective bypass valve (V3, V4) being connected to the control unit (C) which is configured to alternatively route the effluent stream from the effluent duct (5) into the respective helium-3 measuring device (TCD, HID) or into the at least one bypass line (5a, 5b); and/or
- a retentate outlet duct valve (V6) arranged in the retentate outlet duct (9) and a further helium-3 measuring device (D) assigned to the retentate outlet duct (9) and connected to the at least one control unit (C) which is configured to alternatively route the helium-3 rich stream into the refeed duct (3) or into the distillation device (10) by actuating of the retentate outlet duct valve (V6) depending on a concentration of helium-3 in the helium-3 rich stream measured by the measuring device (D).

8. Apparatus according to any one of claims 1 to 7, wherein the apparatus comprises a preliminary purification stage (P) connected to the cover gas duct (2) upstream of the first separator stage (S1).

9. Apparatus according to any one of claims 1 to 8, wherein separation performance of the permeation membrane reactor (PMR) is configured such that the helium-3 rich, carrier gas depleted stream in retentate outlet duct (9) has a concentration of carrier gas of less than 1 mol-%.

10. Apparatus according to any one of claims 2 to 9, wherein the carrier gas is hydrogen and separation membrane (M) is a hydrogen permeable membrane (M), which preferably is a zeolite membrane or a palladium-silver-based membrane.

11. Method for separation and enrichment of helium-3 from a nuclear power plant cover gas comprising a mixture of helium-3 and helium-4, wherein the method, which is preferably performed using an apparatus according to any one of claims 1 to 10, comprises leading of a cover gas stream into a first separator stage (S1) followed by a second separator stage (S2),
comprising the steps
- in the first separator stage (S1) injecting a feed gas stream comprising the cover gas stream and a carrier gas stream into a gas chromatographic unit comprising at least one gas chromatographic column (C-01, C-02), thereby separating at least partially helium-3 into a stream section and helium-4 into another stream section in the carrier gas stream;
- extracting a helium-3 containing effluent stream section from the effluent stream;
- feeding the helium-3 containing effluent stream section into the downstream second separator stage (S2) for performing at least one of a permeation membrane separation and a distillation, thereby obtaining a helium-3 rich stream.

12. Method according to claim 11, wherein in second separator stage (S2) the helium-3 containing effluent stream section is subjected the permeation membrane separation followed by distillation, preferably cryogenic distillation for obtaining the helium-3 rich stream.

13. Method according to claim 11 or 12, wherein in the first separator stage (S1) the feed gas stream is injected alternatively into at least one first gas chromatographic column (C-01) being operated at a temperature ranging from 323 K to 573 K or into at least one second gas chromatographic column (C-02) being operated at a temperature ranging from 77 K to 200 K depending on the composition of the cover gas or the feed gas, mainly on the ratio of helium-3 to helium-4 in the cover/feed gas.

14. Method according to at least one of claims 11 to 13, wherein extracting the helium-3 containing effluent stream section from the effluent stream comprises
- controlling the effluent stream by at least one helium-3 measuring device (TCD, HID) and
a) in the case of detecting the presence of helium-3 in the effluent stream by the at least one helium-3 measuring device (TCD, HID) routing the helium-3 containing effluent stream section into the separator stage (S2) and
b) in the case of detecting no presence of helium-3 in the effluent stream by the at least one helium-3 measuring device (TCD, HID) routing the helium-3-less effluent stream section into a discharge or recycling duct (7).

15. Method according to at least one of claims 11 to 14, wherein at least part of the helium-3 rich stream obtained by the permeation membrane separation is recycled to the feed gas stream, and/or wherein the concentration of carrier gas in the helium-3 rich stream obtained from the separation system is less than 1 mol-%.

## Patentansprüche

1. Vorrichtung zur Trennung und Anreicherung von Helium-3 aus einem Kernkraftwerksschutzgas, das ein Gemisch aus Helium-3 und Helium-4 aufweist, wobei die Vorrichtung einen Schutzgaskanal (2) und zumindest zwei hintereinander angeordnete Trennstufen (S1, S2) aufweist, wobei der Schutzgaskanal (2) mit einer ersten Trennstufe (S1) der zumindest zwei Trennstufen (S1, S2) verbunden ist,
**dadurch gekennzeichnet, dass**
- die erste Trennstufe (S1) eine gaschromatographische Einheit ist, die zumindest eine gaschromatographische Säule (C-01, C-02) aufweist, wobei die Vorrichtung einen Trägergaskanal (1) aufweist, der mit dem Schutzgaskanal (2) in einen Zuführungskanal (4) stromaufwärts von einer ersten der zumindest einen gaschromatographischen Säule (C-01, C-02) mündet, und
- die zweite Trennstufe (S2) über einen Ablaufkanal (5) mit der stromaufwärts gelegenen ersten Trennstufe (S1) verbunden ist und zumindest einen von einem Permeationsmembranreaktor (PMR) und einer Destillationsvorrichtung (10) aufweist.

2. Vorrichtung nach Anspruch 1,
wobei die zweite Trennstufe (S2) einen Permeationsmembranreaktor (PMR) und eine stromabwärts des Permeationsmembranreaktors (PMR) angeordnete Destillationsvorrichtung (10) aufweist, die eine für das Trägergas durchlässige Trennmembran (M) und einen Permeatkanal (8) für einen Helium-3-abgereicherten, Trägergas angereicherten Strom und einen Retentatauslasskanal (9) für einen Helium-3-reichen Strom aufweist, wobei der Retentatauslasskanal (9) mit der Destillationsvorrichtung (10) verbunden ist, die vorzugsweise eine kryogene Destillationsvorrichtung (10) ist.

3. Vorrichtung nach Anspruch 1 oder 2,
wobei die gaschromatographische Einheit zur Durchführung von Verdrängungsgaschromatographie konfiguriert ist und/oder zumindest eine erste gaschromatographische Säule (C-01) und zumindest eine zweite gaschromatographische Säule (C-02) aufweist, wobei die zumindest eine erste gaschromatographische Säule (C-01) parallel zu der zumindest einen zweiten gaschromatographischen Säule (C-02) angeordnet ist, wobei die zumindest eine erste gaschromatographische Säule (C-01) und die zumindest eine zweite gaschromatographische Säule (C-02) alternativ betreibbar sind und zum Betrieb auf unterschiedlichen Temperaturniveaus konfiguriert sind.

4. Vorrichtung nach Anspruch 3,
wobei
- die zumindest eine erste gaschromatographische Säule (C-01) und die zumindest eine zweite gaschromatographische Säule (C-02) mit internen Packungen versehen sind, wobei die Packung der zumindest einen ersten gaschromatographischen Säule (C-01) vorzugsweise eisendotiertes Aluminiumoxid ist und die Packung der zumindest einen zweiten gaschromatographischen Säule (C-02) vorzugsweise ein Molekularsieb, besonders bevorzugt ein Molekularsieb Typ 5A ist; und/oder
- das Temperaturniveau der zumindest einen ersten gaschromatographischen Säule (C-01) in einem Bereich von 323 K bis 573 K, bevorzugt von 373 K bis 483 K, besonders bevorzugt von 423 K und 473 K, liegt, und/oder
- das Temperaturniveau der zumindest einen zweiten gaschromatographischen Säule (C-02) in einem Bereich von 77 K bis 220 K, bevorzugt von 77 K bis 100 K, besonders bevorzugt bei 77 K liegt.

5. Vorrichtung nach einem der Ansprüche 2 bis 4,
**dadurch gekennzeichnet, dass**
die Vorrichtung eine Rückführleitung (3) aufweist, die sich von der zweiten Auslassleitung (9) stromaufwärts der Destillationsvorrichtung (10) zur Trägergasleitung (1) oder zur Schutzgasleitung (2) oder zur Zuführleitung (4) erstreckt.

6. Vorrichtung nach einem der Ansprüche 1 bis 5,
wobei **die Vorrichtung aufweist**
- zumindest eine Steuereinheit (C) zur Steuerung von Ventilen (V1, V2, V3, V4, V5, V6), die im Schutzgaskanal (2), im Zuführkanal (4) und/oder im Ablaufkanal (5) angeordnet sind, und
- zumindest eine dem Ablaufkanal (5) zugeordnete Helium-3-Messeinrichtung (TCD, HID), die mit der zumindest einen Steuereinheit (C) verbunden ist,
wobei die zumindest eine Steuereinheit (C) ausgebildet ist, um
a) den Schutzgaskanal (2) durch Betätigung eines Schutzgaskanalventils (V1) für eine chargenweise Injektion des Schutzgasstroms in die Gaschromatographieeinheit periodisch zu öffnen und zu schließen, und/oder
b) alternativ den Abflussstrom aus dem Ablaufkanal (5) durch Betätigung eines stromabwärts der zumindest einen Helium-3-Messeinrichtung (TCD, HID) angeordneten Abströmkanalventils (V5) in Abhängigkeit von der durch die zumindest eine Helium-3-Messeinrichtung (TCD, HID) detektierten Anwesenheit von Helium-3 im Abgasstrom in einen Trennstufen-Einlasskanal (6) oder in einen Auslass- oder Rückführungskanal (7) zu leiten.

7. Vorrichtung nach Anspruch 6,
**wobei die Vorrichtung ferner aufweist**
- zumindest eine Bypassleitung (5a, 5b) parallel zum Ablaufkanal (5) zur Umgehung zumindest einer der zumindest einen Helium-3-Messeinrichtung (TCD, HID), wobei die zumindest eine Bypassleitung (5a, 5b) stromaufwärts der jeweiligen Helium-3-Messeinrichtung (TCD, HID) von dem Ablaufkanal (5) abzweigt und stromabwärts der jeweiligen Helium-3-Messeinrichtung (TCD, HID) wieder in den Ablaufkanal (5) oder den Trennstufen-Einlasskanal (6) einmündet und stromabwärts der jeweiligen Helium-3-Messeinrichtung (TCD, HID) wieder in den Ablaufkanal (5) oder den Trennstufen-Einlasskanal (6) einmündet, und wobei die zumindest eine Bypass-Leitung (5a, 5b) von dem Ablaufkanal (5) durch ein jeweiliges Bypass-Ventil (V3, V4) getrennt ist, das mit der Steuereinheit (C) verbunden ist, die dazu ausgebildet ist, den Abflussstrom aus dem Ablaufkanal (5) wahlweise in die jeweilige Helium-3-Messeinrichtung (TCD, HID) oder in die zumindest eine Bypassleitung (5a, 5b) zu leiten; und/oder
- ein im Retentatauslasskanal (9) angeordnetes Retentatauslasskanalventil (V6) und eine weitere, dem Retentatauslasskanal (9) zugeordnete Helium-3-Messeinrichtung (D), die mit der zumindest einen Steuereinheit (C) verbunden ist, die dazu eingerichtet ist, den Helium-3reichen Strom durch Betätigung des Retentatauslasskanal-Ventils (V6) in Abhängigkeit von einer von der Messeinrichtung (D) gemessenen Konzentration von Helium-3 im Helium-3reichen Strom alternativ in den Rückführkanal (3) oder in die Destillationseinrichtung (10) zu leiten.

8. Vorrichtung nach einem der Ansprüche 1 bis 7,
wobei die Vorrichtung eine Vorreinigungsstufe (P) aufweist, die stromaufwärts der ersten Trennstufe (S1) an den Schutzgaskanal (2) angeschlossen ist.

9. Vorrichtung nach einem der Ansprüche 1 bis 8,
wobei die Trennleistung des Permeationsmembranreaktors (PMR) so ausgelegt ist, dass der Helium-3-reiche, trägergasabgereicherte Strom im Retentatauslasskanal (9) eine Trägergaskonzentration von weniger als 1 Mol-% aufweist.

10. Vorrichtung nach einem der Ansprüche 2 bis 9, wobei das Trägergas Wasserstoff ist und die Trennmembran (M) eine wasserstoffdurchlässige Membran (M) ist, die bevorzugt eine Zeolithmembran oder eine Membran auf Palladium-Silber-Basis ist.

11. Verfahren zur Trennung und Anreicherung von Helium-3 aus einem Kernkraftwerksschutzgas, das ein Gemisch aus Helium-3 und Helium-4 aufweist, wobei das Verfahren, das bevorzugt unter Verwendung einer Vorrichtung nach einem der Ansprüche 1 bis 10 durchgeführt wird, das Einleiten eines Schutzgasstroms in eine erste Trennstufe (S1), gefolgt von einer zweiten Trennstufe (S2) aufweist,
**umfassend die Schritte**
- in der ersten Trennstufe (S1) Injizieren eines Einspeisegasstroms, der den Schutzgasstrom und einen Trägergasstrom aufweist, in eine gaschromatographische Einheit, die zumindest eine gaschromatographische Säule (C-01, C-02) aufweist, wodurch zumindest teilweise Helium-3 in einen Stromabschnitt und Helium-4 in einen anderen Stromabschnitt in dem Trägergasstrom getrennt wird;
- Extrahieren eines Helium-3 enthaltenden Ablaufstromteil aus dem Ablaufstrom;
- Einspeisen des Helium-3-haltigen Ablaufstromteils in die stromabwärts gelegene zweite Trennstufe (S2) zum Durchführen von zumindest einer von einer Permeationsmembranabtrennung und einer Destillation, wodurch ein Helium-3-reicher Strom erhalten wird.

12. Verfahren nach Anspruch 11,
wobei in der zweiten Trennstufe (S2) der Helium-3-haltige Ablaufstromteils der Permeationsmembranabtrennung mit anschließender Destillation, bevorzugt kryogener Destillation, zur Gewinnung des Helium-3-reichen Stroms unterzogen wird.

13. Verfahren nach Anspruch 11 oder 12,
wobei in der ersten Trennstufe (S1) der Einspeisegasstrom alternativ in zumindest eine erste gaschromatographische Säule (C-01), die bei einer Temperatur im Bereich von 323 K bis 573 K betrieben wird, oder in zumindest eine zweite gaschromatographische Säule (C-02) injiziert wird, die bei einer Temperatur im Bereich von 77 K bis 200 K betrieben wird, abhängig von der Zusammensetzung des Schutzgases oder des Speisegases, hauptsächlich vom Verhältnis von Helium-3 zu Helium-4 im Schutz-/Einspeisegas.

14. Verfahren nach zumindest einem der Ansprüche 11 bis 13,
wobei das Extrahieren des Helium-3-haltigen Abflussstromabschnitts aus dem Abflussstrom aufweist
- Kontrolle des Abflussstroms durch zumindest eine Helium-3-Messeinrichtung (TCD, HID) und
a) im Falle des Erfassens des Vorhandenseins von Helium-3 im Abflussstrom durch die zumindest eine Helium-3-Messeinrichtung (TCD, HID) Leiten des Helium-3-haltigen Abflussstromabschnitts in die Trennstufe (S2) und
b) für den Fall, dass die zumindest eine Helium-3-Messeinrichtung (TCD, HID) keine Anwesenheit von Helium-3 im Abflussstrom feststellt, den Helium-3-freien Abflussstromabschnitt in einen Auslass- oder Rückführungskanal (7) zu leiten.

15. Verfahren nach zumindest einem der Ansprüche 11 bis 14,
wobei zumindest ein Teil des durch die Permeationsmembranabtrennung erhaltenen Helium-3-reichen Stroms in den Einspeisegasstrom zurückgeführt wird, und/oder wobei die Konzentration des Trägergases in dem aus dem Trennsystem erhaltenen Helium-3-reichen Strom weniger als 1 Mol-% beträgt.

## Revendications

1. Appareil permettant la séparation et l'enrichissement de l'hélium-3 provenant d'un gaz de couverture d'une centrale nucléaire, comprenant un mélange d'hélium-3 et d'hélium-4 , l'appareil comprenant une conduite de gaz de couverture (2) et au moins deux étages du séparateur (S1, S2) disposés successivement, la conduite de gaz de couverture (2) étant reliée à un premier étage du séparateur (S1) des au moins deux étages du séparateur (S1, S2) **caractérisé en ce que**
- le premier étage du séparateur (S1) est une unité de chromatographie en phase gazeuse comprenant au moins une colonne de chromatographie en phase gazeuse (C-01, C-02), l'appareil comprenant une conduite de gaz porteur (1) convergeant avec la conduite de gaz de couverture (2) dans une conduite d'alimentation (4) en amont d'une première de la au moins une colonne de chromatographie en phase gazeuse (C-01, C-02)
et
- le deuxième étage du séparateur (S2) est relié au premier étage du séparateur (S1) en amont par une conduite d'effluents (5) et comprend au moins un réacteur à membrane de perméation (PMR) et un dispositif de distillation (10).

2. Appareil selon la revendication 1, le deuxième étage du séparateur (S2) comprenant un réacteur à membrane de perméation (PMR) et un dispositif de distillation (10) disposé en aval du réacteur à membrane de perméation (PMR), lequel comprend une membrane de séparation (M) perméable au gaz porteur, et une conduite de perméation (8) pour un flux enrichi en gaz porteur et appauvri en hélium-3, et une conduite de sortie du rétentat (9) pour un flux riche en hélium-3, la conduite de sortie du rétentat (9) étant reliée au dispositif de distillation (10) qui est préférablement un dispositif de distillation cryogénique (10).

3. Appareil selon la revendication 1 ou 2, l'unité de chromatographie en phase gazeuse étant configurée pour réaliser une chromatographie en phase gazeuse de déplacement et/ou comprenant au moins une première colonne de chromatographie en phase gazeuse (C-01) et au moins une deuxième colonne de chromatographie en phase gazeuse (C-02), au moins une première colonne de chromatographie en phase gazeuse (C-01) étant disposée parallèlement à au moins une deuxième colonne de chromatographie en phase gazeuse (C-02), au moins une première colonne de chromatographie en phase gazeuse (C-01) et au moins une deuxième colonne de chromatographie en phase gazeuse (C-02) étant exploitables alternativement et configurées pour être exploitées à des niveaux de température différents.

4. Appareil selon la revendication 3,
- au moins une première colonne de chromatographie en phase gazeuse (C-01) et au moins une deuxième colonne de chromatographie en phase gazeuse (C-02) étant dotées de garnitures internes, la garniture au moins d'une première colonne de chromatographie en phase gazeuse (C-01) étant préférablement de l'alumine dopée de fer et la garniture au moins d'une deuxième colonne de chromatographie en phase gazeuse (C-02) étant préférablement un tamis moléculaire, plus préférablement un tamis moléculaire de type 5A et/ou
- le niveau de température au moins d'une première colonne de chromatographie en phase gazeuse (C-01) se situant dans une plage de 323 K à 573 K, préférablement de 373 K à 483 K, plus préférablement de 423 K et 473 K et/ou
- le niveau de température au moins d'une deuxième colonne de chromatographie en phase gazeuse (C-02) se situant dans une plage de 77 K à 220 K, préférablement de 77 K à 100 K, plus préférablement à 77 K.

5. Appareil selon l'une des revendications 2 à 4, l'appareil comprenant une conduite de réalimentation (3) s'étendant de la deuxième conduite de sortie (9) en amont du dispositif de distillation (10) à la conduite de gaz porteur (1) ou à la conduite de gaz de couverture (2) ou à la conduite d'alimentation (4).

6. Appareil selon l'une des revendications 1 à 5, l'appareil comprenant
- au moins une unité de contrôle (C) pour le contrôle des valves (V1, V2, V3, V4, V5, V6) qui sont disposées dans la conduite de gaz de couverture (2), la conduite d'alimentation (4) et/ou la conduite d'effluents (5) et
- au moins un dispositif de mesure de l'hélium-3 (TCD, HID) affecté à la conduite d'effluents (5) et relié au moins à une unité de contrôle (C),
au moins une unité de contrôle (C) étant configurée pour
a) ouvrir et fermer périodiquement la conduite de gaz de couverture (2) en actionnant une valve de la conduite de gaz de couverture (V1) pour une injection en mode batch du flux de gaz de couverture dans l'unité de chromatographie en phase gazeuse, et/ou
b) diriger alternativement le flux d'effluents de la conduite d'effluents (5) dans une conduite d'entrée des étages du séparateur (6) ou dans une conduite d'évacuation ou de recyclage (7) en actionnant une valve de la conduite d'effluents (V5) disposée en aval au moins d'un dispositif de mesure de l'hélium-3 (TCD, HID) en fonction de la présence d'hélium-3 dans le flux d'effluents, détectée par au moins un dispositif de mesure de l'hélium-3 (TCD, HID).

7. Appareil selon la revendication 6, l'appareil comprenant en outre
- au moins une conduite de dérivation (5a, 5b) en parallèle à la conduite d'effluents (5) pour la dérivation au moins d'un dispositif de mesure de l'hélium-3 (TCD, HID), au moins une conduite de dérivation (5a, 5b) divergeant de la conduite d'effluents (5) en amont du dispositif de mesure de l'hélium-3 (TCD, HID) respectif et rejoignant la conduite d'effluents (5) ou la conduite d'entrée des étages du séparateur (6) en aval du dispositif de mesure de l'hélium-3 (TCD, HID) respectif, et au moins une conduite de dérivation (5a, 5b) étant séparée de la conduite d'effluents (5) par une valve de dérivation (V3, V4) respective, reliée à l'unité de contrôle (C) qui est configurée pour diriger alternativement le flux d'effluents depuis la conduite d'effluents (5) dans le dispositif de mesure de l'hélium-3 (TCD, HID) respectif ou dans au moins une conduite de dérivation (5a, 5b); et/ou
- une valve de la conduite de sortie du rétentat (V6) disposée dans la conduite de sortie du rétentat (9) et un autre dispositif de mesure de l'hélium-3 (D) affecté à la conduite de sortie du rétentat (9) et relié au moins à une unité de contrôle (C) qui est configurée pour diriger alternativement le flux riche en hélium-3 dans la conduite de réalimentation (3) ou dans le dispositif de distillation (10) en actionnant la valve de la conduite de sortie du rétentat (V6) en fonction d'une concentration d'hélium-3 dans le flux riche en hélium-3, mesurée par le dispositif de mesure (D).

8. Appareil selon l'une des revendications 1 à 7, l'appareil comprenant un étage de purification préliminaire (P) relié à la conduite de gaz de couverture (2) en amont du premier étage du séparateur (S1).

9. Appareil selon l'une des revendications 1 à 8, la réalisation de la séparation du réacteur à membrane de perméation (PMR) étant configurée de telle manière à ce que le flux riche en hélium-3 et appauvri en gaz porteur dans la conduite de sortie du rétentat (9) ait une concentration de gaz porteur inférieure à 1 mole pourcent.

10. Appareil selon l'une des revendications 2 à 9, le gaz porteur étant de l'hydrogène et la membrane de séparation (M) étant une membrane perméable à l'hydrogène (M) qui est préférablement une membrane zéolithe ou une membrane à base de palladium-argent.

11. Procédé permettant la séparation et l'enrichissement de l'hélium-3 provenant d'un gaz de couverture d'une centrale nucléaire, comprenant un mélange d'hélium-3 et d'hélium-4, le procédé qui est préférablement réalisé à l'aide d'un appareil selon l'une des revendications 1 à 10, comprenant la direction d'un flux de gaz de couverture dans un premier étage du séparateur (S1) suivi d'un deuxième étage du séparateur (S2),
**comprenant les étapes**
- dans le premier étage du séparateur (S1), l'injection
d'un flux de gaz d'alimentation comprenant le flux de gaz de couverture et un flux de gaz porteur dans une unité de chromatographie en phase gazeuse comprenant au moins une colonne de chromatographie en phase gazeuse (C-01, C-02), séparant ainsi au moins partiellement l'hélium-3 en une section de flux et l'hélium-4 en une autre section de flux dans le flux de gaz porteur,
- l'extraction d'une section du flux d'effluents contenant de l'hélium-3 à partir du flux d'effluents
- l'alimentation de la section du flux d'effluents contenant de l'hélium-3 dans le deuxième étage du séparateur (S2) en aval pour la réalisation au moins d'une séparation de la membrane de perméation et d'une distillation, obtenant ainsi un flux riche en hélium-3.

12. Procédé selon la revendication 11, dans lequel dans le deuxième étage du séparateur (S2), la section du flux d'effluents contenant de l'hélium-3 est soumise à la séparation de la membrane de perméation, suivie de la distillation, préférablement la distillation cryogénique, pour l'obtention d'un flux riche en hélium-3.

13. Procédé selon la revendication 11 ou 12, dans lequel dans le premier étage du séparateur (S1), le flux de gaz d'alimentation est injecté alternativement dans au moins une première colonne de chromatographie en phase gazeuse (C-01) exploitée à une température se situant entre 323 K et 573 K ou au moins dans une deuxième colonne de chromatographie en phase gazeuse (C-02) exploitée à une température se situant entre 77 K et 200 K en fonction de la composition du gaz de couverture ou du gaz d'alimentation, principalement en fonction du rapport entre l'hélium-3 et l'hélium-4 dans le gaz de couverture/d'alimentation.

14. Procédé selon au moins l'une des revendications 11 à 13, l'extraction de la section du flux d'effluents contenant de l'hélium-3 à partir du flux d'effluents comprenant
- le contrôle du flux d'effluents par au moins un dispositif de mesure de l'hélium-3 (TCD, HID) et
a) dans le cas d'une détection de la présence d'hélium-3 dans le flux d'effluents par au moins un dispositif de mesure de l'hélium-3 (TCD, HID), la direction de la section du flux d'effluents contenant de l'hélium-3 dans l'étage du séparateur (S2) et
b) dans le cas d'une détection de la non-présence d'hélium-3 dans le flux d'effluents par au moins un dispositif de mesure de l'hélium-3 (TCD, HID), la direction de la section du flux d'effluents sans hélium-3 dans une conduite d'évacuation ou de recyclage (7).

15. Procédé selon au moins l'une des revendications 11 à 14, au moins une partie du flux riche en hélium-3, obtenue par la séparation de la membrane de perméation, étant recyclée dans le flux de gaz d'alimentation et/ou la concentration de gaz porteur dans le flux riche en hélium-3, obtenue par le système de séparation, étant inférieure à 1 mole pourcent.
